# FASCICULE DE BREVET EUROPEEN

(11) **EP 3 625 040 B1**
(45) Date de publication et mention de la délivrance du brevet: **19.08.2020**
(21) Numéro de dépôt: 19724871.9
(22) Date de dépôt: 22.05.2019
(51) Int. Cl.: B29C 70/50, B29C 70/08, B29D 99/00, B27N 3/08, B29C 70/24, B29C 70/46, B29B 11/12, B29C 53/06, B29C 33/02, B29K 101/12, B29C 31/00, B29C 53/04, B29C 65/00

(54) **DISPOSITIF ET PROCÉDÉ DE MISE EN FORME D'UNE PIÈCE D'ÉBAUCHE POUR LA FORMATION D'UNE PIÈCE THERMOPLASTIQUE STRUCTURELLE**
VORRICHTUNG UND VERFAHREN ZUM FORMEN EINES ROHLINGS ZUR FORMUNG EINES THERMOPLASTISCHEN BAUTEILS
DEVICE AND METHOD FOR SHAPING A BLANK FOR THE FORMING OF A THERMOPLASTIC STRUCTURAL PART

(30) Priorité: 28.05.2018 FR 1854476
(43) Date de publication de la demande: 25.03.2020
(73) Titulaire: Stelia Aerospace, 17300 Rochefort (FR)
(72) Inventeur: MAGNIN, Pierre, 31130 Balma (FR)
(74) Mandataire: Argyma
(86) Numéro de dépôt international: PCT/EP2019/063261
(87) Numéro de publication internationale: WO 2019/228893

(56) Documents cités:
- DE-A1-102016 120 197
- US-A- 2 822 575
- US-A- 4 151 031
- US-A1- 2007 175 572
- US-A1- 2009 021 047

## Description

### DOMAINE TECHNIQUE GENERAL ET ART ANTERIEUR

La présente invention concerne le domaine de la fabrication de pièces aéronautiques et concerne plus précisément un dispositif de mise en forme de pièces thermoplastiques de grandes dimensions destinées à former la structure d'un avion conformément à la revendication 1 et un procédé correspondant conformément à la revendication 8.

Par grandes dimensions, on entend qu'une des dimensions de la pièce aéronautique est supérieure à 1 m.

De manière connue, un avion comprend une structure primaire par laquelle transitent les efforts mécaniques et une structure secondaire montée sur la structure primaire. A ce titre, la structure primaire comprend notamment le fuselage, délimitant le corps de l'avion et définissant son enveloppe structurelle, la voilure, comprenant les deux ailes, permettant d'assurer la portance de l'avion en vol, et l'empennage placé à l'arrière de l'avion et permettant d'assurer sa stabilité. La structure primaire comporte notamment plusieurs longerons. Selon l'état de la technique, un longeron possède une section transversale en U de manière à posséder une rigidité élevée. De manière connue, un longeron est réalisé dans un matériau métallique, par exemple en aluminium. Cependant un matériau métallique présente l'inconvénient d'être lourd, aussi les longerons sont de nos jours généralement fabriqués dans un matériau composite.

De manière connue, un longeron en matériau composite est réalisé par imprégnation de fibres de renfort dans une matrice thermodurcissable. Une telle matrice thermodurcissable est figée par polymérisation, c'est-à-dire au moyen d'une réaction chimique au cours de laquelle la matrice passe de l'état liquide ou visqueux à l'état solide sous l'effet de la chaleur. Lorsque la matrice thermodurcissable est chaude celle-ci est moulée afin d'obtenir la forme souhaitée, comme c'est le cas par exemple de longerons en forme de U, pour lesquels il est nécessaire de courber les deux branches latérales. Pour cela, la pièce composite thermodurcissable est moulée, par exemple, par thermocompression dans un autoclave. De manière connue, un autoclave est une enceinte hermétique dans laquelle la pression et la température peuvent être contrôlées et augmentées de manière à presser le matériau composite entre un moule et un contre-moule tout en chauffant l'ensemble, afin de donner à la pièce fabriquée sa forme finale. Cependant, un tel autoclave présente des dimensions limitées, ce qui ne permet pas la fabrication de pièces de grandes dimensions comme par exemple des longerons d'une aile d'avion, qui doivent tenir dans une enceinte confinée. De plus, de telles pièces composites sont longues à fabriquer. La polymérisation est réalisée par chauffage à entre 100 et 200°C pendant une durée de plusieurs heures. La cadence de fabrication est donc faible.

Aussi, il existe une volonté pour remplacer les pièces composites à matrice thermodurcissable par des pièces composites à matrice thermoplastique. Le cycle de fabrication d'une telle pièce est plus court mais présente l'inconvénient de devoir être chauffée à de très hautes températures, pouvant aller jusqu'à 410°C afin de consolider la pièce composite.

Pour former une telle pièce, les fibres de renfort sont noyées dans la matrice thermoplastique puis l'ensemble est chauffé et positionné entre deux moules pour être mis en forme par exemple dans une presse, appliquant une pression importante sur l'ensemble des moules au moyen d'un ou plusieurs vérins hydrauliques. Cependant, un tel procédé de fabrication présente l'inconvénient de nécessiter un alignement parfait des deux moules positionnés en vis-à-vis l'un de l'autre, afin de limiter les risques de déformation de la pièce, ainsi qu'une pression équivalente sur toute la longueur des moules, de manière à compresser l'ensemble du moule, ce qui est complexe à mettre en oeuvre pour la fabrication de pièces de grandes dimensions. Aussi, les procédés de fabrication selon l'art antérieur ne permettent pas la fabrication de pièces de grandes dimensions comme par exemple un longeron monobloc.

De plus, afin de former une pièce tridimensionnelle, les fibres de renfort sont drapées de manière tridimensionnelle par des robots, ce qui est long et onéreux par comparaison au drapage à plat pour former une pièce planaire. Le coût devient très important lorsque la pièce à réaliser possède des dimensions importantes.

Un des objectifs de la présente invention est de proposer un dispositif de mise en forme d'une pièce d'ébauche pour la formation d'une pièce thermoplastique structurelle, destinée à être intégrée à une structure primaire d'un d'avion, qui soit simple et rapide pour permettre la fabrication de pièces structurelles tridimensionnelles d'un seul tenant à une cadence industrielle.

On connaît par le document US4151031 un appareil pour former en continu des formes allongées à partir de bandes thermoplastiques renforcées par des fibres, en particulier, une poutre structurelle ayant une forme en I de section identique. Un tel appareil ne permet pas de former des pièces structurelles dont la section est variable. De plus, cet appareil enseigne de déformer la pièces par passage successif dans plusieurs outils différents ayant une unique fonction, ce qui empêche la fabrication aisée de sections de formes différentes. Les documents US 2009/021047 A1, US 2007/175572 A1 et US 2822575A possèdent des enseignements équivalents.

### PRESENTATION GENERALE DE L'INVENTION

A cet effet, l'invention concerne un dispositif de mise en forme d'une pièce d'ébauche pour la formation d'une pièce thermoplastique structurelle, destinée à être intégrée à une structure primaire d'un d'avion, la pièce d'ébauche comportant des fibres de renfort noyées dans une matrice thermoplastique, ledit dispositif de mise en forme comportant :
- un organe de support d'une pièce d'ébauche, l'organe de support s'étendant selon un axe longitudinal,
- au moins un organe de chauffage configuré pour chauffer une portion longitudinale de la pièce d'ébauche à une température permettant de rendre malléable la matrice thermoplastique de la pièce d'ébauche,
- au moins un organe d'inclinaison configuré pour modifier l'inclinaison d'au moins une partie de la portion longitudinale de la pièce d'ébauche selon un angle d'inclinaison paramétrable par rapport au plan horizontal dans un plan transversal à l'axe longitudinal, et
- un système de déplacement d'amont en aval selon l'axe longitudinal de l'organe de chauffage et de l'organe d'inclinaison relativement à l'organe de support de manière à modifier successivement l'inclinaison d'une partie de chaque portion longitudinale de la pièce d'ébauche.

Grâce à l'invention, le dispositif de mise en forme permet de mettre en forme de manière consécutive chaque portion longitudinale de la pièce d'ébauche. Contrairement à l'art antérieur qui imposait de recourir à des équipements de dimensions supérieures à celles de la pièce à former, le dispositif de mise en forme permet un traitement local et non un traitement global. Cela permet avantageusement de mettre en forme des pièces structurelles de grandes dimensions. En outre, un tel dispositif de mise en forme de pièces structurelles à matrice thermoplastique autorise des cadences de fabrication élevées qui n'étaient pas atteignables pour des pièces structurelles à matrice thermodurcissable. L'utilisation d'organes de chauffage et d'inclinaison permet de donner localement une forme tridimensionnelle à une portion longitudinale de la pièce d'ébauche suite à son chauffage. Etant donné que l'angle d'inclinaison est paramétrable, la déformation de la partie d'ébauche peut être réglée de manière progressive, ce qui évite la formation de points de faiblesse dans la pièce d'ébauche et, en conséquence, dans la pièce thermoplastique structurelle finalisée.

De préférence, l'organe de support possédant une section transversale définissant une surface supérieure horizontale et au moins une surface latérale qui est inclinée par rapport ladite surface supérieure horizontale, l'angle d'inclinaison maximal correspond à l'angle formé entre la surface latérale et la surface supérieure horizontale de l'organe de support. Ainsi, l'organe d'inclinaison paramétrable permet de rabattre progressivement une partie de la pièce d'ébauche contre la surface latérale, la surface latérale permettant de définir de manière précise l'inclinaison désirée.

De manière préférée, chaque organe d'inclinaison comporte au moins un organe de roulement de manière à permettre une compression lors de son déplacement par le système de déplacement. Ainsi, la mise en forme peut être réalisée pour une pièce d'ébauche de grande longueur avec un même dispositif de mise en forme. De préférence, l'organe de roulement s'étend dans un plan transversal à l'axe longitudinal de manière à déformer la section transversale de la pièce d'ébauche.

De manière préférée, chaque organe d'inclinaison comporte au moins un dispositif paramétrable de modification de l'angle d'inclinaison de l'organe de roulement. L'angle d'inclinaison peut être modifié afin de répéter successivement les opérations de mises en forme pour incliner progressivement une partie de l'ébauche jusqu'à l'inclinaison souhaitée.

Selon un aspect de l'invention, le dispositif de mise en forme comprend au moins deux organes d'inclinaison configurés pour modifier l'inclinaison de deux parties latérales d'une portion longitudinale de la pièce d'ébauche.

Selon un aspect de l'invention, le dispositif de mise en forme comprend au moins un organe de refroidissement configuré pour refroidir la portion locale de la pièce d'ébauche à une température permettant de solidifier la matrice thermoplastique de la pièce d'ébauche. Ainsi, chaque inclinaison est figée de manière précise pour contrôler la déformation et éviter toute formation d'un point de faiblesse.

De manière préférée, le dispositif de mise en forme comprend au moins un module comprenant un châssis configuré pour être déplacé par le système de déplacement, l'organe de chauffage et l'organe d'inclinaison étant reliés audit châssis. Ainsi, la juxtaposition de l'organe de chauffage et de l'organe d'inclinaison permet de déformer de manière optimale la pièce d'ébauche qui est à la bonne température. De manière avantageuse, grâce à l'organe d'inclinaison paramétrable, le châssis peut être déplacé de manière pratique pour déformer de manière paramétrable la pièce d'ébauche et obtenir une forme complexe dont la section est variable selon sa longueur. Un tel châssis est adaptable à différents types de pièces.

De manière préférée, l'organe de chauffage possède une section évasée vers l'organe de support de manière à permettre un chauffage uniforme d'une portion locale de la pièce d'ébauche au cours de sa mise en forme. De manière préférée, la forme de l'organe de chauffage est paramétrable pour s'adapter aux déformations progressives de la pièce d'ébauche.

De préférence, le dispositif de mise en forme comprend au moins un organe de plaquage aval configuré pour plaquer la portion locale de la pièce d'ébauche contre l'organe de support, l'organe de plaquage aval étant situé en aval de l'organe de chauffage. Ainsi, la pièce d'ébauche est immobilisée pour réaliser une déformation précise.

De préférence encore, le dispositif de mise en forme comprend au moins un organe de plaquage amont configuré pour plaquer la portion locale de la pièce d'ébauche contre l'organe de support, l'organe de plaquage amont étant situé en amont de l'organe de chauffage. Ainsi, une portion longitudinale de la pièce d'ébauche est immobilisée pour réaliser une déformation précise, toute déformation indésirable étant évitée.

L'invention concerne également un procédé de mise en forme d'une pièce thermoplastique structurelle, destinée à être intégrée à une structure primaire d'un d'avion, la pièce d'ébauche comportant des fibres de renfort noyées dans une matrice thermoplastique, la pièce d'ébauche étant mise en forme par un dispositif de mise en forme tel que présenté précédemment, la pièce d'ébauche étant supportée sur l'organe de support, le procédé comporte :
- une étape de chauffage d'une portion locale de la pièce d'ébauche à une température permettant de faire fondre la matrice thermoplastique de la pièce d'ébauche puis
- une étape de modification de l'inclinaison d'au moins une partie de la portion longitudinale de la pièce d'ébauche selon un angle d'inclinaison défini par rapport au plan horizontal dans un plan transversal à l'axe longitudinal, et
- une étape de déplacement d'amont en aval selon l'axe longitudinal de l'organe de chauffage et de l'organe d'inclinaison relativement à l'organe de support de manière à modifier successivement l'inclinaison d'une partie de chaque portion longitudinale de la pièce d'ébauche selon l'angle d'inclinaison.

De manière préférée, le procédé comporte une répétition des étapes de chauffage, de modification de l'inclinaison et de déplacement, l'angle d'inclinaison étant augmenté à chaque répétition. Une déformation progressive permet de limiter l'apparition de zones de faiblesse selon la direction longitudinale mais également selon la direction latérale. Les propriétés mécaniques des fibres de renfort sont préservées.

Selon un aspect préféré, l'organe de support possédant une section transversale définissant une surface supérieure horizontale et au moins une surface latérale qui est inclinée par rapport ladite surface supérieure horizontale, la pièce d'ébauche est supportée sur la surface supérieure horizontale et une partie de la pièce d'ébauche est inclinée progressivement jusqu'à être plaquée contre la surface latérale.

De préférence, la pièce d'ébauche est planaire et est mise en forme par le procédé. Une telle pièce d'ébauche planaire est simple, peu onéreuse et rapide à former. Grâce à l'invention, des pièces d'ébauches tridimensionnelles peuvent être obtenues à une cadence industrielle.

De manière préférée, chaque portion locale de la pièce d'ébauche est successivement chauffée, déformée par inclinaison et refroidie. Ainsi, chaque déformation élémentaire est contrôlée de manière précise.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique en perspective d'un dispositif de mise en forme selon une forme de réalisation de l'invention,
- la figure 2 est une représentation schématique de dessus du dispositif de mise en forme de la figure 1,
- la figure 3 est une représentation schématique en coupe transversale d'une déformation progressive des branches latérales de la pièce d'ébauche,
- la figure 4 est une représentation schématique de côté du dispositif de mise en forme de la figure 1,
- la figure 5 est une représentation schématique du dispositif de mise en forme de la figure 1 depuis l'aval,
- la figure 6 est une représentation schématique du dispositif de mise en forme de la figure 1 depuis l'amont et
- la figure 7 est une représentation schématique des étapes de déplacement des organes d'inclinaison au cours de la mise en forme.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

De manière connue, une pièce thermoplastique structurelle, destinée à être intégrée à une structure primaire d'un d'avion, est formée à partir d'une pièce d'ébauche comportant des fibres de renfort noyées dans une matrice thermoplastique. Comme indiqué précédemment, afin d'obtenir une pièce finie, la pièce d'ébauche doit être chauffée à une température supérieure à la température de fusion de la matrice thermoplastique tout en étant compressée afin d'augmenter sa densité et se rigidifier. A titre d'exemple, les fibres de renfort sont en carbone et la matrice est en PEEK ou PEKK. Une pièce d'ébauche 1 n'est pas consolidée et est poreuse.

Dans cet exemple, la pièce d'ébauche 1 est réalisée par drapage à plat des fibres de renfort pré-imprégnées de matrice PEEK ou PEKK. Une telle méthode de drapage est plus rapide et moins onéreuse à réaliser qu'un drapage tridimensionnel. Après drapage, la pièce d'ébauche 1 est planaire et rigide. La pièce d'ébauche 1 n'est pas consolidée.

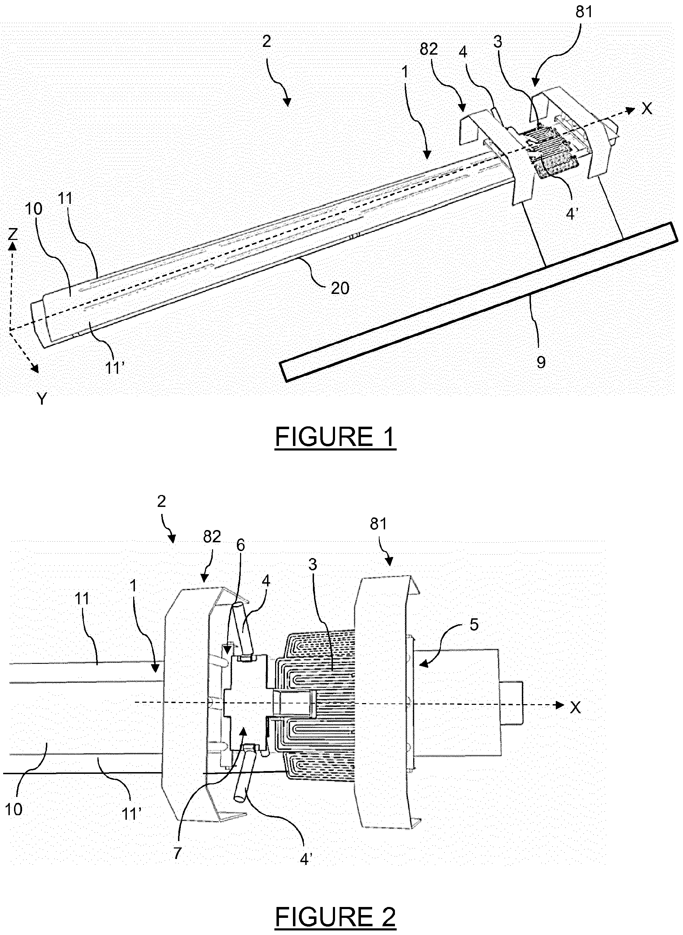

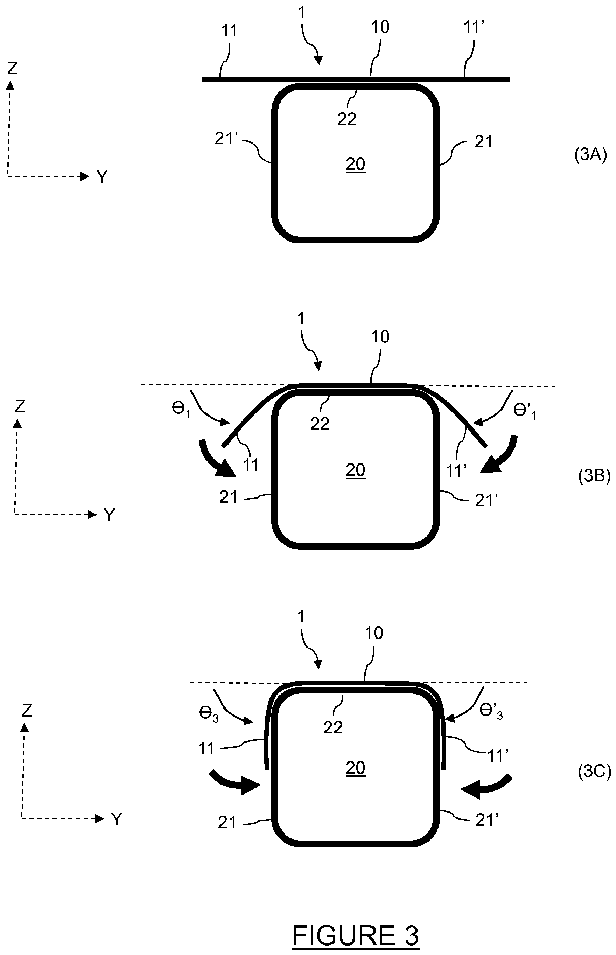

A titre d'exemple, en référence à la figure 1, il est représenté une pièce d'ébauche 1 qui s'étend longitudinalement selon un axe X sur une longueur supérieure à 1 m, de préférence, supérieure à 5 m. Dans cet exemple, la largeur de la pièce d'ébauche 1 varie selon l'axe longitudinal. Grâce au dispositif de mise en forme 2 selon l'invention, en référence à la figure 3, la pièce d'ébauche planaire 1 va être mise en forme pour posséder une section en U de manière à définir une base horizontale 10 et deux branches latérales 11, 11' (une branche latérale gauche 11 et une branche latérale droite 11'). Dans cet exemple, les branches latérales 11, 11' sont orthogonales à la base horizontale 10 mais il va de soi que leur inclinaison pourrait être différente. De même, il va de soi que la pièce d'ébauche 1 ne pourrait comprendre qu'une unique branche latérale 11, 11'.

En référence aux figures 1 et 2, il est représenté de manière schématique un dispositif de mise en forme 2 d'une pièce d'ébauche 1 selon une forme de réalisation de l'invention.

Dans cet exemple, le dispositif de mise en forme 2 comporte un organe de support 20 d'une pièce d'ébauche 1 qui s'étend d'amont en aval selon l'axe X, un organe de chauffage 3, deux organes d'inclinaison 4, 4' et un système de déplacement 9 d'amont en aval selon l'axe longitudinal X de l'organe de chauffage 3 et des organes d'inclinaison 4, 4' relativement à l'organe de support 20 de manière à modifier successivement l'inclinaison d'une partie de chaque portion longitudinale de la pièce d'ébauche 1.

En référence à la figure 1, l'organe de support 20 s'étend selon un axe longitudinal X de manière à supporter la pièce d'ébauche 1 selon sa longueur. L'organe de support 20 possède une surface supérieure de forme adaptée à la forme finie de la pièce thermoplastique structurelle. Dans cet exemple, l'organe de support 20 possède une surface de support ayant une section en U inversé. La section de la surface de support varie selon la longueur de l'organe de support 20 afin d'obtenir la forme souhaitée de la pièce thermoplastique structurelle. Dans cet exemple, en référence à la figure 3, la section transversale définit une surface supérieure horizontale 22 et deux surfaces latérales 21, 21' qui sont inclinées par rapport à ladite surface supérieure horizontale 22. Dans cet exemple, les surfaces latérales 21, 21' sont orthogonales à la surface supérieure horizontale 22. Il va de soi que l'inclinaison des surfaces latérales 21, 21' pourrait être différente en fonction du type de mise en forme désirée.

Par la suite, le dispositif de mise en forme 2 est défini dans un repère orthogonal X, Y, Z dans lequel l'axe X s'étend longitudinalement d'amont en aval, l'axe Y s'étend latéralement de la gauche vers la droite et l'axe Z s'étend verticalement du bas vers le haut.

Afin de permettre une mise en forme optimale de la pièce d'ébauche 1 par le dispositif de mise en forme 2, l'organe de support 20 possède une structure rigide, en particulier, en matériau métallique afin de ne pas se déformer au cours de la fabrication. L'organe de support 20 est également appelé enclume. Dans cet exemple, l'organe de support 20 possède une longueur supérieure à 2 m. Pour faciliter les manipulations, l'organe de support 20 possède une longueur supérieure à celle de la pièce d'ébauche 1.

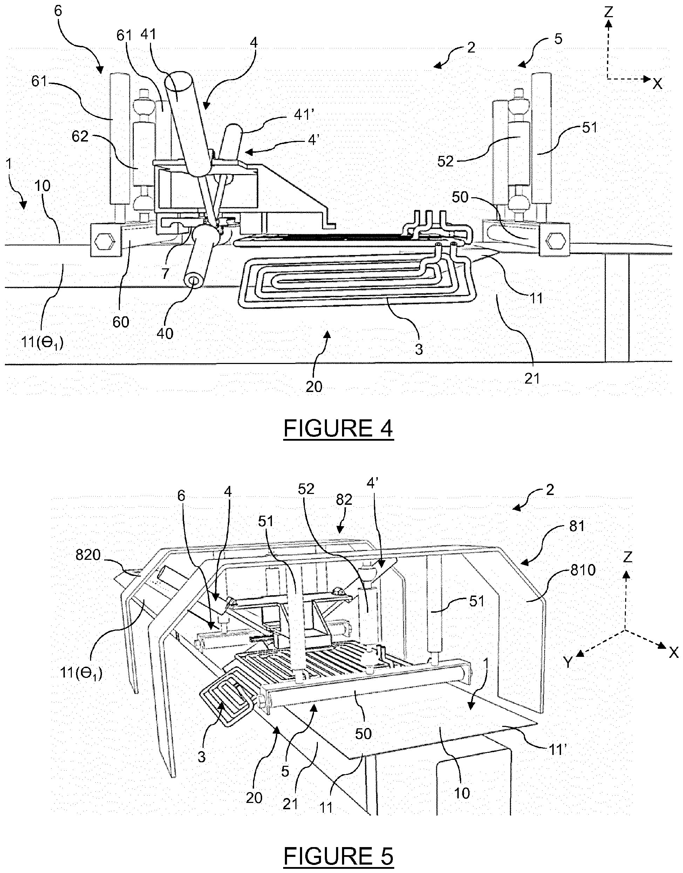

En référence aux figures 2 et 5, l'organe de chauffage 3 est configuré pour chauffer une portion locale de la pièce d'ébauche 1 à une température permettant de faire fondre la matrice thermoplastique de la pièce d'ébauche 1. En particulier, l'organe de chauffage 3 permet de chauffer à une température supérieure à 360°C/380°C pour atteindre la température de fusion de la matrice thermoplastique de la pièce d'ébauche 1.

L'organe de chauffage 3 est configuré pour réaliser un chauffage par induction en faisant circuler un courant dans un élément métallique ou directement dans les fibres de renfort, mais il va de soi que d'autres technologies de chauffage pourraient convenir, en particulier, par infrarouge ou résistif. Dans cet exemple, l'organe de chauffage 3 permet d'induire un courant dans les fibres de renfort de la pièce d'ébauche 1.

Comme illustré à la figure 5, l'organe de chauffage 3 possède une section évasée vers l'organe de support 20 de manière à permettre un chauffage uniforme d'une portion locale de la pièce d'ébauche 1 au cours de sa mise en forme. Ainsi, la base 10 et les branches latérales 11, 11' de la pièce d'ébauche 1 peuvent être chauffées de manière homogène. L'organe de chauffage 3 comporte une paroi supérieure et deux parois latérales, chacune comportant des spires magnétiques. Selon un aspect préféré de l'invention, l'inclinaison des parois latérales de l'organe de chauffage est réglable, dans cet exemple, sur une plage angulaire de 90°. Ainsi, lorsqu'une portion longitudinale de la pièce d'ébauche 1 est située dans la cavité de l'organe de chauffage 1, la portion longitudinale est chauffée localement à haute température et devient malléable, ce qui permet une modification de l'inclinaison des branches latérales 11, 11' de la pièce d'ébauche 1 par les organes d'inclinaison 4, 4' comme cela sera présenté par la suite.

Il va de soi que la structure de l'organe de chauffage 3 pourrait être différente en fonction de la technologie de chauffage employée, par exemple, résistif ou infrarouge.

De manière préférée, l'organe de chauffage 3 peut être couplé à un ou plusieurs organes de mesure de la température afin de contrôler la température au cours de la fabrication.

Comme illustré à la figure 2, le dispositif de mise en forme 2 comporte un organe d'inclinaison gauche 4 et un organe d'inclinaison droite 4' qui sont respectivement configurés pour modifier l'inclinaison de la branche latérale gauche 11 et de la branche latérale droite 11' de la pièce d'ébauche 1 selon un angle d'inclinaison θ, θ' déterminé par rapport au plan horizontal dans lequel s'étend la base 10 de la pièce d'ébauche 1.

Dans cet exemple, les organes d'inclinaison 4, 4' sont configurés pour rabattre les branches latérales 11, 11' de la pièce d'ébauche 1 contre les surfaces latérales 21, 21' de l'organe de support 20. L'angle d'inclinaison maximal souhaité est de 90°, ce qui correspond à l'angle formé entre chaque surface latérale 21, 21' et la surface supérieure horizontale 22 de l'organe de support 20. Il va de soi que les angles d'inclinaison θ, θ' des organes d'inclinaison 4, 4' pourraient être différents en fonction de la mise en forme souhaitée.

Les organes d'inclinaison 4, 4' sont tous orientés dans un plan transversal à l'axe X de manière à déformer successivement chaque portion longitudinale lors du déplacement relatif par rapport à l'organe de support 20.

Dans cet exemple, en référence à la figure 4, chaque organe d'inclinaison 4, 4' comprend un organe de roulement 40, 40' s'étendant dans un plan transversal à l'axe longitudinal X et un dispositif paramétrable de modification 41, 41' de l'angle d'inclinaison θ, θ' de l'organe de roulement 40, 40' pour appuyer l'organe de roulement 40, 40' sur la pièce d'ébauche 1 tout en réglant l'angle d'inclinaison θ, θ' déterminé par rapport au plan horizontal.

De manière préférée, l'organe de roulement 40, 40' se présente sous la forme d'un rouleau. Le dispositif paramétrable de modification 41, 41' est configuré pour incliner de manière graduelle l'organe de roulement 40, 40'. Chaque organe d'inclinaison 4, 4' est configuré pour exercer une compression oblique selon un axe oblique par rapport aux axes Y et Z. Dans cet exemple, le dispositif paramétrable de modification 41, 41' se présente sous la forme de vérin avec un système de pivot ou un variateur angulaire (électrique, hydraulique ou pneumatique). Chaque organe d'inclinaison 4, 4' peut déformer la pièce d'ébauche 1 tout en se déplaçant longitudinalement selon l'axe longitudinal X sur la pièce d'ébauche 1.

Comme illustré à la figure 4, le dispositif de mise en forme 2 comporte un organe de plaquage aval 5 et un organe de plaquage amont 6 afin d'immobiliser la pièce d'ébauche 1 lorsque la portion de la pièce d'ébauche 1, située entre l'organe de plaquage aval 5 et l'organe de plaquage amont 6, est déformée par les organes d'inclinaison 4, 4'.

Les organes de plaquage 5, 6 sont tous orientés dans un plan transversal à l'axe X de manière à compresser successivement chaque portion longitudinale.

Dans cet exemple, chaque organe de plaquage 5, 6 comprend un organe de roulement 50, 60, un organe de pression 52, 62 pour appuyer l'organe de roulement 50, 60 sur la pièce d'ébauche 1 et plusieurs organes de guidage 51, 61 de l'organe de roulement 52, 62. De manière préférée, l'organe de roulement 50, 60 se présente sous la forme d'un rouleau et l'organe de pression 52, 62 se présente sous la forme d'un vérin de pression. Les organes de guidage 51, 61 se présentent pour leur part sous la forme de coulisses de manière à autoriser un déplacement de l'organe de roulement 50, 60 uniquement en translation selon l'axe de l'organe de pression 50, 60 sans tourner autour dudit axe. Ainsi, chaque organe de plaquage 5, 6 peut plaquer la pièce d'ébauche 1 tout en se déplaçant longitudinalement selon l'axe X sur la pièce d'ébauche 1. Chaque organe de plaquage 5, 6 réalise un plaquage dans un plan transversal à l'axe longitudinal X de manière à plaquer successivement chaque portion longitudinale de la pièce d'ébauche 1.

En référence à la figure 4, les organes de plaquage 5, 6 sont configurés pour réaliser un plaquage vertical de la pièce d'ébauche 1 contre l'organe de support 20, en particulier, contre sa surface supérieure 22. De manière préférée, la force verticale de plaquage est comprise entre 14 et 300 psi.

La force de compression de chaque organe de plaquage 5, 6 et de chaque organe d'inclinaison 4, 4' peut avantageusement être réglée de manière individuelle.

De manière optionnelle, en référence à la figure 4, le dispositif de mise en forme 2 comporte un organe de refroidissement 7 configuré pour refroidir une portion locale de la pièce d'ébauche 1. En particulier, l'organe de refroidissement 7 permet de refroidir la portion longitudinale à une température inférieure à la température de transition vitreuse de la matrice thermoplastique de la pièce d'ébauche 1 pour que celle-ci redevienne rigide afin de fixer ses dimensions. Dans cet exemple, l'organe de refroidissement 7 est configuré pour réaliser un refroidissement par soufflage d'air. Il va de soi que d'autres technologies de refroidissement pourraient convenir, en particulier, un système de compression par rouleaux réfrigérés.

L'organe de refroidissement 7 se présente sous la forme d'une canalisation d'éjection d'air orientée verticalement vers le bas de manière à refroidir la base 10 de la pièce d'ébauche 1 ainsi que les branches latérales 11, 11' de la pièce d'ébauche 1 dont l'inclinaison a été modifiée. Ainsi, lorsqu'une portion longitudinale de la pièce d'ébauche 1 est située sous l'organe de refroidissement 7, celle-ci est refroidie localement de manière à rigidifier et figer sa structure.

Selon l'invention, en référence à la figure 1, le dispositif de mise en forme 2 comporte un système de déplacement 9 de l'organe de chauffage 3, des organes d'inclinaison 4, 4', des organes de plaquage 5, 6 et de l'organe de refroidissement 7 selon l'axe longitudinal X de l'organe de support 20. Dans cet exemple, le système de déplacement 9 comporte différents organes de déplacement (roues, rail, etc.) pour déplacer les organes selon l'axe longitudinal X par rapport à l'organe de support 20. Néanmoins, il va de soi que d'autres moyens pourraient convenir, notamment, un portique aérien de déplacement. Le système de déplacement 9 peut être fixé au sol ou en hauteur.

Dans une forme de réalisation non représentée, le système de déplacement 9 pourrait être configuré pour déplacer l'organe de support 20 tandis que l'organe de chauffage 3, les organes d'inclinaison 4, 4', les organes de plaquage 5, 6 et l'organe de refroidissement 7 demeurent fixes. Seul un mouvement relatif doit être réalisé pour permettre la déformation consécutive de chaque portion longitudinale.

Dans cet exemple de réalisation, les différents organes sont rassemblés en plusieurs modules.

En référence aux figures 5 à 6, le dispositif de mise en forme 2 comporte un module aval 81 et un module amont 82 qui sont déplacés par le système de déplacement 9 par rapport à l'organe de support 20. Il va de soi que le système de déplacement 9 pourrait également déplacer l'organe de support 20 afin de créer un mouvement relatif.

Le module aval 81 comprend un châssis 810 qui possède une forme de U inversé définissant une concavité dans laquelle est monté l'organe de plaquage aval 5. L'organe de plaquage aval 5 comprend un organe de roulement 50, un organe de pression 52 reliant l'organe de roulement 50 au châssis 810 et deux organes de guidage 51 reliant l'organe de roulement 50 au châssis 810, en particulier, de part et d'autre de l'organe de pression 52. Comme indiqué précédemment, chaque organe de roulement 50 se présente sous la forme d'un rouleau, chaque organe de pression 52 se présente sous la forme d'un vérin et chaque organe de guidage 51 se présente sous la forme d'une coulisse.

Le châssis 810 du module aval 81 est relié au système de déplacement 9 afin de permettre le déplacement du module aval 81 selon la direction longitudinale X. Lors du déplacement longitudinal selon l'axe X, la base 10 de la pièce d'ébauche 1 est contrainte par l'organe de plaquage aval 5 contre l'organe de support 20, ce qui permet de l'immobiliser.

Le module amont 82 comprend un châssis 820 qui possède une forme de U inversé définissant une concavité dans laquelle sont montés, d'aval en amont, l'organe de chauffage 3, les organes d'inclinaison 4, 4', l'organe de refroidissement 7 et l'organe de plaquage amont 6.

De manière analogue à l'organe de plaquage aval 5, l'organe de plaquage amont 6 comprend un organe de roulement 60, un organe de pression 62 reliant l'organe de roulement 60 au châssis 820 et deux organes de guidage 61 reliant l'organe de roulement 60 au châssis 820, en particulier, de part et d'autre de l'organe de pression 62. Comme indiqué précédemment, chaque organe de roulement 60 se présente sous la forme d'un rouleau, chaque organe de pression 62 se présente sous la forme d'un vérin et chaque organe de guidage 61 se présente sous la forme d'une coulisse.

De manière analogue à précédemment, le châssis 820 du module amont 82 est relié au système de déplacement 9 afin de permettre le déplacement du module amont 82 selon la direction longitudinale X. Lors du déplacement longitudinal selon l'axe X, une portion locale de la pièce d'ébauche 1 est chauffée par l'organe de chauffage 3 à une température supérieure à la température de fusion de la matrice thermoplastique de manière à rendre la pièce d'ébauche 1 malléable puis directement contrainte par les organes d'inclinaison 4, 4' afin de rabattre de manière progressive les branches latérales 11, 11' de la pièce d'ébauche 1 sans induire de faiblesses dans la pièce d'ébauche 1. Après déformation, la pièce d'ébauche 1 est refroidie à une température inférieure à la température de transition vitreuse de la matrice thermoplastique afin de fixer la déformation obtenue. La déformation est contrôlée de manière optimale évitant toute déformation non désirée. L'organe de plaquage amont 6 permet, à la manière de l'organe de plaquage aval 5, d'immobiliser la portion longitudinale qui est déformée.

Un exemple de mise en oeuvre d'un procédé de mise en forme d'une pièce thermoplastique structurelle, destinée à être intégrée à une structure primaire d'un d'avion, va être dorénavant présenté.

La pièce d'ébauche 1 comporte des fibres de renfort noyées dans une matrice thermoplastique. La pièce d'ébauche 1 est planaire et est supportée sur l'organe de support 20, en particulier, sur la surface supérieure 22 comme illustré à la figure 3. La pièce d'ébauche 1 n'est pas consolidée et a été réalisée par drapage à plat.

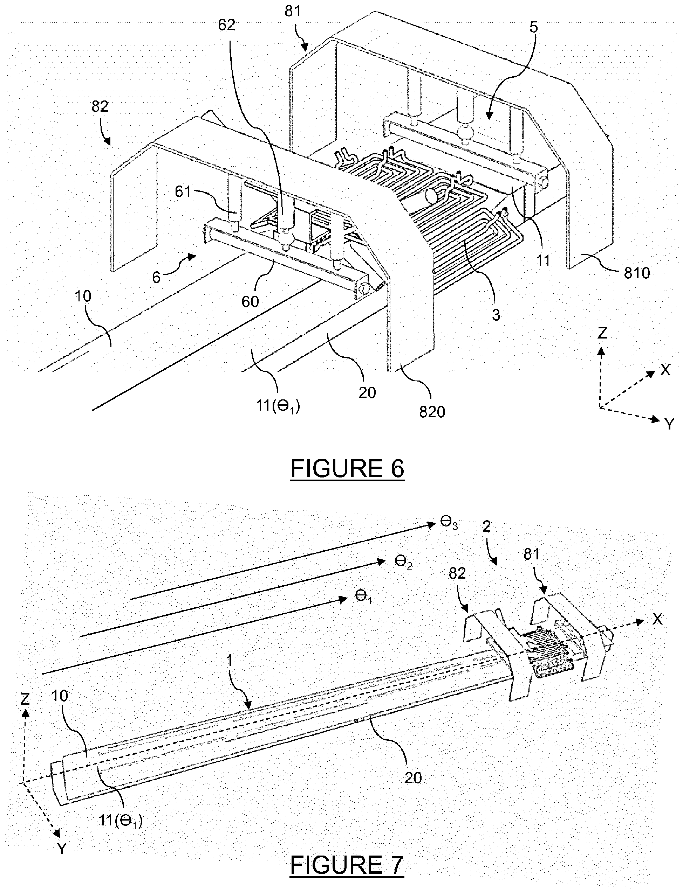

En référence à la figure 7, les modules 81, 82 du dispositif de mise en forme 2, situés en amont de la pièce d'ébauche 1, sont déplacés de manière continue ou séquentielle de l'amont vers l'aval par le système de déplacement 9 (non représenté sur ces figures).

Chaque portion longitudinale de la pièce d'ébauche 1 est traitée consécutivement par le module aval 81 et le module amont 82. Le module aval 81 plaque de manière préliminaire la pièce d'ébauche 1 dans son ensemble afin de la préparer au chauffage. La pièce d'ébauche 1 est ainsi immobilisée.

Puis, l'organe de chauffage 3 du module amont 82 chauffe la portion locale de la pièce d'ébauche 1 à une température supérieure à la température de fusion de la matrice thermoplastique (température de l'ordre de 360°C-380°C) afin de ramollir la pièce d'ébauche 1.

Ensuite, les organes d'inclinaison 4, 4' modifient respectivement l'inclinaison des branches latérales 11, 11' de la portion longitudinale chauffée de la pièce d'ébauche 1 selon un premier angle d'inclinaison θ₁ défini par rapport au plan horizontal dans un plan transversal à l'axe longitudinal X. Le premier angle d'inclinaison θ₁ est inférieur à un seuil angulaire, ici de valeur 15°, de manière à ne pas induire de faiblesses à la jonction de la base 10 et des branches latérales 11, 11' de la pièce d'ébauche 1. Le seuil angulaire de déformation permet en outre de limiter toute faiblesse entre deux portions longitudinale successives de la pièce d'ébauche 1. Au cours du procédé, les branches latérales 11, 11' sont plus éloignées des surfaces latérales 21, 21' de l'organe de support 20 en amont des organes d'inclinaison 4, 4' qu'en aval. Ainsi, l'inclinaison est progressive, ce qui permet de tirer avantage de la matrice thermoplastique qui peut être rendue malléable de manière répétée sans affecter les propriétés mécaniques de la pièce d'ébauche 1. L'intégrité des fibres de renfort est préservée.

L'intégration des organes d'inclinaison 4, 4' et d'un organe de chauffage 3 dans un même module amont 82 permet avantageusement aux organes d'inclinaison 4, 4' de déformer de manière optimale la pièce d'ébauche 1 qui a été rendu malléable. Les étapes de chauffage et de déformation sont directement enchainées, la matrice thermoplastique n'ayant pas le temps de se refroidir à une température inférieure à la température de transition vitreuse de la matrice thermoplastique. Autrement dit, le module amont 82 permet de modifier progressivement l'inclinaison des branches latérales 11, 11'.

L'organe de refroidissement 7 permet de refroidir la portion locale en figeant la matrice thermoplastique, celle-ci étant refroidie à une température inférieure à la température de transition vitreuse de la matrice thermoplastique. De manière analogue à l'organe de plaquage aval 5, l'organe de plaquage amont 6 compresse et plaque la pièce d'ébauche 1 afin de lui donner sa forme finale. Tout pliage ou torsion non désirée de la pièce d'ébauche 1 est ainsi évité. Ainsi, chaque portion locale de la pièce d'ébauche 1 est successivement chauffée, déformée et refroidie.

Comme illustré à la figure 7, le procédé comporte une répétition des étapes de chauffage, de modification de l'inclinaison et de déplacement afin de déformer de manière progressive les branches latérales 11, 11' de la pièce d'ébauche 1. L'angle d'inclinaison θ est incrémenté à chaque répétition θ₁, θ₂, θ₃. De manière préférée, l'incrément angulaire est inférieur au seuil angulaire afin de ne pas induire de faiblesses dans la pièce d'ébauche 1. Les modules 81, 82 réalisent ainsi plusieurs allers-retours sur l'organe de support 20.

Dans cet exemple, les branches latérales 11, 11' sont inclinées progressivement jusqu'à être plaquées contre les surfaces latérales 21, 21' de la pièce de support 20. De manière préférée, entre 3 et 5 répétitions sont nécessaires pour obtenir la forme souhaitée en U. Un tel procédé de mise en forme est ainsi rapide à mettre en oeuvre.

En outre, grâce à l'invention, chaque portion longitudinale de la pièce d'ébauche 1 peut être mise en forme de manière locale. Cela est particulièrement avantageux pour la fabrication de pièces de grandes dimensions, il n'est pas nécessaire de prévoir un équipement ayant des dimensions supérieures à la pièce à fabriquer. Il n'existe ainsi plus de contraintes liées aux dimensions de la pièce à mettre en forme.

L'invention s'applique à différentes pièces structurelles et présente un intérêt important pour celles de grandes dimensions, c'est-à-dire, ayant au moins une dimension supérieure à 1 m et, de préférence, supérieure à 5 m.

Une fois la pièce d'ébauche 1 mise en forme de manière tridimensionnelle, celle-ci peut être consolidée afin de diminuer sa porosité, en particulier, au moyen d'un dispositif tel que présenté dans la demande de brevet FR1852432 de la Demanderesse. L'utilisation d'un dispositif de mise en forme et d'un dispositif de fabrication présente des effets synergiques pour atteindre des cadences de production industrielle pour la fabrication de pièces thermoplastiques structurelles.

## Revendications

1. Dispositif de mise en forme (2) d'une pièce d'ébauche (1) pour la formation d'une pièce thermoplastique structurelle, destinée à être intégrée à une structure primaire d'un d'avion, la pièce d'ébauche (1) comportant des fibres de renfort noyées dans une matrice thermoplastique, ledit dispositif de mise en forme (2) comportant :
- un organe de support (20) d'une pièce d'ébauche (1), l'organe de support (20) s'étendant selon un axe longitudinal (X),
- au moins un organe de chauffage (3) configuré pour chauffer une portion longitudinale de la pièce d'ébauche (1) à une température permettant de rendre malléable la matrice thermoplastique de la pièce d'ébauche (1),
- au moins un organe d'inclinaison (4, 4') configuré pour modifier l'inclinaison d'au moins une partie de la portion longitudinale de la pièce d'ébauche (1) selon un angle d'inclinaison paramétrable (θ) par rapport au plan horizontal dans un plan transversal à l'axe longitudinal (X),
- au moins un module (82) comprenant un châssis (820) configuré pour être déplacé par le système de déplacement (9), l'organe de chauffage (3) et l'organe d'inclinaison (4, 4') étant reliés audit châssis (820) et
- un système de déplacement (9) d'amont en aval selon l'axe longitudinal (X) de du châssis (820) de manière à modifier successivement l'inclinaison d'une partie de chaque portion longitudinale de la pièce d'ébauche (1).

2. Dispositif de mise en forme (2) selon la revendication 1, dans lequel chaque organe d'inclinaison (4, 4') comporte au moins un organe de roulement (40, 40') de manière à permettre une compression lors de son déplacement par le système de déplacement (9).

3. Dispositif de mise en forme (2) selon la revendication 2, dans lequel l'organe de roulement (40, 40') s'étend dans un plan transversal à l'axe longitudinal (X).

4. Dispositif de mise en forme (2) selon l'une des revendications 2 à 3, dans lequel chaque organe d'inclinaison (4, 4') comporte au moins un dispositif paramétrable de modification (41, 41') de l'angle d'inclinaison (θ, θ') de l'organe de roulement (40, 40').

5. Dispositif de mise en forme (2) selon l'une des revendications 1 à 4, comprenant au moins deux organes d'inclinaison (4, 4') configurés pour modifier l'inclinaison de deux parties latérales d'une portion longitudinale de la pièce d'ébauche (1).

6. Dispositif de mise en forme (2) selon l'une des revendications 1 à 5, comprenant au moins un organe de refroidissement (7) configuré pour refroidir la portion locale de la pièce d'ébauche (1) à une température permettant de solidifier la matrice thermoplastique de la pièce d'ébauche (1),

7. Dispositif de mise en forme (2) selon l'une des revendications 1 à 6, dans lequel, l'organe de chauffage (3) possède une section évasée vers l'organe de support (20) de manière à permettre un chauffage uniforme d'une portion locale de la pièce d'ébauche (1) au cours de sa mise en forme.

8. Procédé de mise en forme d'une pièce thermoplastique structurelle, destinée à être intégrée à une structure primaire d'un d'avion, la pièce d'ébauche (1) comportant des fibres de renfort noyées dans une matrice thermoplastique, la pièce d'ébauche (1) étant mise en forme par un dispositif de mise en forme (2) selon l'une des revendications 1 à 7, la pièce d'ébauche (1) étant supportée sur l'organe de support (20), le procédé comporte :
- une étape de chauffage d'une portion locale de la pièce d'ébauche (1) à une température permettant de faire fondre la matrice thermoplastique de la pièce d'ébauche (1) puis
- une étape de modification de l'inclinaison d'au moins une partie de la portion longitudinale de la pièce d'ébauche (1) selon un angle d'inclinaison (θ) défini par rapport au plan horizontal dans un plan transversal à l'axe longitudinal (X), et
- une étape de déplacement d'amont en aval selon l'axe longitudinal (X) de l'organe de chauffage (3) et de l'organe d'inclinaison (4, 4') relativement à l'organe de support (20) de manière à modifier successivement l'inclinaison d'une partie de chaque portion longitudinale de la pièce d'ébauche (1) selon l'angle d'inclinaison (θ).

9. Procédé de mise en forme selon la revendication précédente dans lequel le procédé comporte une répétition des étapes de chauffage, de modification de l'inclinaison et de déplacement, l'angle d'inclinaison (θ) étant augmenté à chaque répétition.

10. Procédé de mise en forme selon l'une des revendications 8 à 9 dans lequel, l'organe de support (20) possédant une section transversale définissant une surface supérieure horizontale (22) et au moins une surface latérale (21, 21') qui est inclinée par rapport ladite surface supérieure horizontale (22), la pièce d'ébauche (1) est supportée sur la surface supérieure horizontale (22) et une partie de la pièce d'ébauche (1) est inclinée progressivement jusqu'à être plaquée contre la surface latérale (21, 21').

## Patentansprüche

1. Vorrichtung zum Formen (2) eines Rohlings (1) für die Bildung eines thermoplastischen Strukturteils, das bestimmt ist, in eine primäre Struktur eines Flugzeugs integriert zu sein, wobei der Rohling (1) in eine thermoplastische Matrix getauchte Verstärkungsfasern aufweist, wobei die Vorrichtung zum Formen (2) aufweist:
- ein Stützelement (20) eines Rohlings (1), wobei sich das Stützelement (20) gemäß einer Längsachse (X) erstreckt,
- mindestens ein Heizelement (3), die ausgelegt ist, um einen Längsabschnitt des Rohlings (1) auf eine Temperatur zu erwärmen, die erlaubt, die thermoplastische Matrix des Rohlings (1) formbar zu machen,
- mindestens ein Neigungselement (4, 4'), die ausgelegt ist, um die Neigung mindestens eines Teils des Längsabschnitts des Rohlings (1) gemäß einem parametrierbaren Neigungswinkel (Θ) in Bezug auf die horizontale Ebene in einer zur Längsachse (X) transversalen Ebene zu ändern,
- mindestens ein Modul (82), umfassend ein Gestell (820), das ausgelegt ist, um von dem Verlagerungssystem (9) verlagert zu werden, wobei das Heizelement (3) und das Neigungselement (4, 4') mit dem Gestell (820) verbunden sind, und
- ein Verlagerungssystem (9) von vorgelagert nach nachgelagert gemäß der Längsachse (X) des Gestells (820), so dass nach und nach die Neigung eines Teils jedes Längsabschnitts des Rohlings (1) geändert wird.

2. Vorrichtung zum Formen (2) nach Anspruch 1, wobei jedes Neigungselement (4, 4') mindestens ein Rollelement (40, 40') aufweist, so dass eine Kompression bei ihrer Verlagerung durch das Verlagerungssystem (9) gestattet ist.

3. Vorrichtung zum Formen (2) nach Anspruch 2, wobei sich das Rollelement (40, 40') in einer zur Längsachse (X) transversalen Ebene erstreckt.

4. Vorrichtung zum Formen (2) nach einem der Ansprüche 2 bis 3, wobei jedes Neigungselement (4, 4') mindestens eine parametrierbare Änderungsvorrichtung (41, 41') des Neigungswinkels (Θ, Θ') des Rollelements (40, 40') aufweist.

5. Vorrichtung zum Formen (2) nach einem der Ansprüche 1 bis 4, umfassend mindestens zwei Neigungselemente (4, 4'), die ausgelegt sind, um die Neigung von zwei seitlichen Teilen eines Längsabschnitts des Rohlings (1) zu ändern.

6. Vorrichtung zum Formen (2) nach einem der Ansprüche 1 bis 5, umfassend mindestens ein Kühlelement (7), die ausgelegt ist, um den lokalen Abschnitt des Rohlings (1) auf eine Temperatur zu kühlen, die erlaubt, die thermoplastische Matrix des Rohlings (1) zu verfestigen.

7. Vorrichtung zum Formen (2) nach einem der Ansprüche 1 bis 6, wobei das Heizelement (3) einen in Richtung des Stützelements (20) erweiterten Querschnitt besitzt, so dass ein gleichmäßiges Erwärmen eines lokalen Abschnitts des Rohlings (1) bei seinem Formen gestattet ist.

8. Verfahren zum Formen eines thermoplastischen Strukturteils, das bestimmt ist, in eine primäre Struktur eines Flugzeugs integriert zu sein, wobei der Rohling (1) in eine thermoplastische Matrix getauchte Verstärkungsfasern aufweist, wobei der Rohling (1) von einer Vorrichtung zum Formen (2) nach einem der Ansprüche 1 bis 7 geformt wird, wobei der Rohling (1) von dem Stützelement (20) gestützt wird, wobei das Verfahren aufweist:
- einen Schritt des Erwärmens eines lokalen Abschnitts des Rohlings (1) auf eine Temperatur, die gestattet, die thermoplastische Matrix des Rohlings (1) zu schmelzen, dann
- einen Schritt des Änderns der Neigung mindestens eines Teils des Längsabschnitts des Rohlings (1) gemäß einem in Bezug auf die horizontale Ebene in einer zur Längsachse (X) transversalen Ebene festlegten Neigungswinkel (Θ), und
- einen Schritt des Verlagerns von vorgelagert nach nachgelagert gemäß der Längsachse (X) des Heizelements (3) und des Neigungselements (4, 4') relativ zum Stützelement (20), so dass nach und nach die Neigung eines Teils jedes Längsabschnitts des Rohlings (1) gemäß dem Neigungswinkel (Θ) geändert wird.

9. Verfahren zum Formen nach vorhergehendem Anspruch, wobei das Verfahren eine Wiederholung der Schritte des Erwärmens, des Änderns der Neigung und der Verlagerung aufweist, wobei der Neigungswinkel (Θ) bei jeder Wiederholung vergrößert wird.

10. Verfahren zum Formen nach einem der Ansprüche 8 bis 9, wobei, wobei das Stützelement (20) einen Querschnitt besitzt, der eine horizontale obere Fläche (22) und mindestens eine seitliche Fläche (21, 21') besitzt, die in Bezug auf die horizontale obere Fläche (22) geneigt ist, der Rohling (1) von der horizontalen oberen Fläche (22) getragen wird und ein Teil des Rohlings (1) nach und nach geneigt wird, bis er an der seitlichen Fläche (21, 21') anliegt.

## Claims

1. A device for shaping (2) a blank piece (1) for forming a structural thermoplastic piece, arranged to be integrated into a primary structure of an airplane, the blank piece (1) comprising reinforcing fibres embedded into a thermoplastic matrix, said shaping device (2) comprising:
- a support member (20) for a blank piece (1), the support member (20) extending along a longitudinal axis (X),
- at least one heating member (3) configured to heat a longitudinal portion of the blank piece (1) to a temperature for making the thermoplastic matrix of the blank piece (1) malleable,
- at least one tilt member (4, 4') configured to modify the tilt of at least part of the longitudinal portion of the blank piece (1) at a parametrable tilt angle (θ) with respect to the horizontal plane in a plane transverse to the longitudinal axis (X),
- at least one module (82) comprising a chassis (820) configured to be moved by the moving system (9), the heating member (3) and the tilt member (4, 4') being connected to said chassis (820) and
- a moving system (9) moving from upstream to downstream along the longitudinal axis (X) of the chassis (820) so as to successively modify tilt of part of each longitudinal portion of the blank piece (1).

2. The shaping device (2) according to claim 1, wherein each tilt member (4, 4') comprises at least one rolling member (40, 40') so as to enable a compression during its movement by the moving system (9).

3. The shaping device (2) according to claim 2, wherein the rolling member (40, 40') extends in a plane transverse to the longitudinal axis (X).

4. The shaping device (2) according to one of claims 2 to 3, wherein each tilt member (4, 4') comprises at least one parametrable device for modifying (41, 41') the tilt angle (θ, θ') of the rolling member (40, 40').

5. The shaping device (2) according to one of claims 1 to 4, comprising at least two tilt members (4, 4') configured to modify tilt of two said parts of a longitudinal portion of the blank piece (1).

6. The shaping device (2) according to one of claims 1 to 5, comprising at least one cooling member (7) configured to cool the local portion of the blank piece (1) to a temperature for solidifying the thermoplastic matrix of the blank piece (1).

7. The shaping device (2) according to one of claims 1 to 6, wherein the heating member (3) comprises a cross-section flaring out to the support member (20) so as to enable uniform heating of a local portion of the blank piece (1) when shaped.

8. A method for shaping a structural thermoplastic piece, arranged to be integrated into a primary structure of an airplane, the blank piece (1) comprising reinforcing fibres imbedded into a thermoplastic matrix, the blank piece (1) being shaped by a shaping device (2) according to one of claims 1 to 7, the blank piece (1) being supported on the support member (20), the method comprises:
- a step of heating a local portion of the blank piece (1) to a temperature for melting the thermoplastic matrix of the blank piece (1) and then
- a step of modifying tilt of at least part of the longitudinal portion of the blank piece (1) at a tilt angle (θ) defined with respect to the horizontal plane in a plane transverse to the longitudinal axis (X), and
- a step of moving from upstream to downstream along the longitudinal axis (X) the heating member (3) and the tilt member (4, 4') relative to the support member (20) so as to successively modify tilt of part of each longitudinal portion of the blank piece (1) at the tilt angle (θ).

9. A shaping method according to the previous claim, wherein the method comprises repeating the steps of heating, modifying tilt and moving, the tilt angle (θ) being increased at each repetition.

10. A shaping method according to one of claims 8 to 9, wherein the support member (20) comprises a transverse cross-section defining a horizontal upper surface (22) and at least one side surface (21, 21') which is tilted with respect to said horizontal upper surface (22), the blank piece (1) is supported on the horizontal upper surface (22) and part of the blank piece (1) is gradually tilted until it is pressed against the side surface (21, 21').
